# EUROPEAN PATENT SPECIFICATION

(11) **EP 2 522 686 B1**
(45) Date of publication and mention of the grant of the patent: **11.07.2018**
(21) Application number: 12167442.8
(22) Date of filing: 10.05.2012
(51) Int. Cl.: C08L 71/02, C09D 171/02, D21H 19/62, C08L 71/00, C08G 59/42, C08G 59/68

(54) **Miscela indurente a bassa temperatura per resine epossidiche**
Bei niedriger Temperatur härtbare Epoxyharzzusammensetzung
Composition de résine époxy réticulable à basse & xA; température

(30) Priority: 10.05.2011 IT MI20110797
(43) Date of publication of application: 14.11.2012
(73) Proprietor: POLYNT S.P.A., 24020 Scanzorosciate, BG (IT)
(72) Inventor: Leonardi, Maurizio, 52028 TERRANUOVA BRACCIOLINI AR (IT); Bresciani, Massimo, 24122 BERGAMO (IT); Cortelli, Carlotta, 40069 ZOLA PREDOSA BO (IT)
(74) Representative: Modiano, Micaela Nadia

(56) References cited:
- WO-A1-97/02307
- WO-A1-2008/014931
- US-A- 3 635 869
- US-A- 4 137 275
- US-A- 5 030 730
- US-A- 5 244 944

## Description

### Background art

Epoxy resins are materials formed by thermosetting polymers based on polyepoxides which are used widely in many fields (coatings, adhesives, electrical, laminates, et cetera). For this purpose, polyepoxides are mixed with a cross-linking agent (or hardening agent), which generates a rigid structure by mutually bonding the chains of the resin. The cross-linking reaction is in itself exothermic but requires, after the mixing of the epoxy component with the hardening component, the application of a triggering temperature to then continue autonomously.

The two main families of hardening agents for epoxy resins are
- anhydrides and
- amines.

In general, amines are capable of reacting with the epoxy resin even at low temperatures (including ambient temperature or lower), while anhydrides require higher triggering temperatures (>100°C) in order to make cross-linking occur.

The characteristic of acting as cross-linking agent only at temperatures above 100°C is indeed a technological barrier for the use of anhydrides in some fields, in which it is not possible (or not easily possible) to apply heating to the hardenable system, i.e., the system constituted by epoxy resin and hardening mix, in order to trigger cross-linking.

Typical examples of fields in which it is not possible to use anhydrides are those requiring the use of hot forming technologies, which cannot always be applied easily when it is necessary to provide monolithic parts of considerable size (such as in the nautical or aviation sector or in the manufacture of turbines for wind-power generation stations) or when the articles cannot be heated, as occurs for coverings used for example in the building sector (e.g., flooring).

Therefore, in the fields indicated above, as well as for similar fields and applications, nowadays there are no commercially available hardening agents based on anhydride for epoxy resins that can be used for hardening at triggering temperatures that do not exceed 100 °C.

However, the provision of anhydride-based hardening agents usable at temperatures up to 100 °C, particularly at temperatures comprised between -5 °C and 100 °C, would be highly desirable, not only to have an alternative to hardening agents based on amine, but also and most of all in order to have new hardening agents providing the following advantages related to anhydride hardening agents, i.e.:
- higher cross-linking density
- better mechanical properties, flexural strength and higher TG
- better chemical resistance
- lesser toxicological implications due to the handling of the hardening agent.

These advantages are in fact already appreciated in fields where triggering hardening at a temperature above 100 °C is not a problem due to the limited size of the articles.

With this background, the present invention has made it possible to identify for the first time a hardening mix based on anhydrides, appropriately mixed with other adjuvants, which allows the triggering of the cross-linking of epoxy resin even at temperatures below those currently applied and can therefore be applied also in fields in which only amines are currently used.

### Summary of the invention

The present invention relates to a hardening mix for epoxy resins and the use thereof as defined in the present claims which comprises an anhydride or a mixture of anhydrides, a catalyst, a co-catalyst and a hardening rate regulator. The invention relates to a hardening mix for epoxy resins which comprises (i) 100 parts by weight of an organic anhydride or mixture of organic anhydrides, (ii) 1.5-2.5 parts by weight (relative to the anhydride) of an amine catalyst, preferably selected from the group that consists of an aliphatic amine, an aromatic amine, a quaternary ammonium salt of an aliphatic amine or a quaternary ammonium salt of an aromatic amine or mixtures thereof, (iii) 0.5-7.0 parts by weight (relative to the anhydride) of a co-catalyst selected from the group that consists of a salt or organyl of an electrophilic metal preferably selected from the group that consists of Cr(III), Fe(III), Al(III), Mn(III), Co(III), Co(II) and Zn(II) or mixtures thereof and (iv) 0.1-1.0 parts by weight (relative to the anhydride) of a hardening rate regulator which is constituted by a complexing agent of the electrophilic metal, constituted preferably by an organic acid having 2-7 carbon atoms or by a mixture of said organic acids, said organic acids being at least dicarboxylic.

Further aspects relate to the use of an anhydride or of a mixture of anhydrides as disclosed in the present claims to prepare a hardening mix according to the invention, the use of the hardening mix according to the present claims to harden epoxy resins at triggering temperatures comprised between -5°C and 50°C under standard atmospheric pressure (101.325 kPa) a hardenable epoxy system as defined in the present claims which comprises (a) a polyepoxide, (b) a hardening mix according to the invention (or components (i)-(iv) thereof) and (c) optionally a reactive diluent of the polyepoxide (a); and a method for obtaining said hardenable epoxy system, comprising the mixing of the polyepoxide (a) with the hardening mix (b) or with the components (i)-(iv) thereof, and optionally with the reacting diluent (c).

Further aspects relate to a hardened epoxy resin as defined in the present claims which comprises the product of reaction between (a) a polyepoxide, (b) a hardening mix according to the invention (or components (i)-(iv) thereof) and optionally (c) a reactive diluent of the polyepoxide (a), a method for obtaining said hardened epoxy resin, said method comprising a step of triggering the hardening at temperatures comprised between -5°C and 50°C under standard atmospheric pressure conditions (101.325 kPA).

Further aspects also defined in the present claims relate to a composite material which comprises hardened epoxy resin according to a preceding aspect of the invention, a two- or three-dimensional body/article made of hardened epoxy resin according to a preceding aspect of the invention, or made of a composite material according to a preceding aspect of the invention, and to a process for obtaining said body/article, said process comprising a step of infusion, lamination, filament winding or pouring of the hardenable epoxy system described here.

Further aspects of the present claims relate to the use of said body/article as cladding or as load-bearing part in the building sector or as cladding or load-bearing part or movable part in the construction of vehicles, boats, ships, aircraft, vehicles on rails, components for wind-power generators and to the use of the hardenable epoxy system as described previously as an adhesive or sealant.

### Detailed description of the invention

The hardening mix of the present claims has been devised to obtain, in the field of hardening agents based on anhydrides, the triggering of the hardening (curing) of epoxy resins at lower temperatures than the ones currently used.

It is useful to note that epoxy resins are thermosetting polymers characterized by the presence of two or more epoxy groups (CH₂-O-CH) with which the bonding agents react during polymerization. All epoxy resins and particularly those given below by way of non-limiting example are within the scope of the present invention.

Most industrial epoxy resins are bi- or multifunctional. Monofunctional epoxides are mainly used as reactive diluents, viscosity modifiers and adhesion promoters.

The resins most commonly used are the product of a reaction of polycondensation between epichlorohydrin and bisphenol A, the general structure of which is given in the structure formula below.

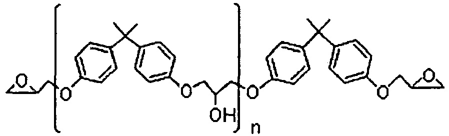

There are other types of bi- or multifunctional epoxy resins such as bisphenol F resins, phenolic resins (novolacs), cycloaliphatic resins derived from the epoxidation of different substrates. The multifunctionality of resins such as novolacs produces a high cross-linking density which makes it possible to obtain superior heat resistance and chemical resistance. The viscosity of an epoxy resin is a function of molecular weight and can vary greatly from liquid to solid at ambient temperature and such resins are therefore often mixed with diluents to lower the viscosity to levels which are adequate for the application.

The reactive diluents most commonly used are monofunctional epoxides such as glycidyl ethers of C₁₂-C₁₄ alcohols, butyl alcohol, or bifunctional ones, such as glycidyl ethers of C₄-C₆ diols.

More specifically, the invention relates to a new anhydride hardening agent for such epoxy resins which triggers cross-linking at low temperatures, close to ambient temperature, between -5°C and 50°C under standard atmospheric pressure conditions (101.325 kPa) to be used in combination with polyepoxides, preferably with polyepoxide preparations which are specific for applications in infusion, lamination, filament winding, pouring. For the purposes of the present invention, all the temperatures given in the present application refer to normal ambient pressure, i.e., standard atmospheric pressure conditions (101.325 kPA). By way of example, it should be noted that infusion is a technique for providing composites which provides for the laying of reinforcement fibers on the mold in dry conditions and subsequently the addition of a hardenable epoxy system (i.e., epoxy component plus hardening component) to the mold by negative pressure. In other words, an area at lower pressure with respect to the surrounding atmospheric pressure is created inside the mold and is capable of drawing the hardenable epoxy system, for which inflow channels have been provided which go from the storage tanks of the hardenable epoxy system to the mold. This negative pressure, commonly known as vacuum, is obtained by covering the mold with a film of plastic material, known as vacuum bag, which is effectively connected to the mold to avoid air infiltrations. Air is aspirated from the region between the vacuum bag and the mold by means of an electromechanical pump and suction ducts; the vacuum bag thus adheres forcefully to the mold, compressing the fibers and creating the negative pressure that is required in order to make the hardenable epoxy system flow in. Once the hardenable epoxy system begins to flow out into the mold, it must be able to travel over the entire surface of the mold, i.e., impregnating all the fibers, in a time which is shorter than the time during which hardening begins. The hardenable epoxy system in fact must remain in the liquid state throughout the infusion process in order to allow complete impregnation of all the regions. The resin hardening process can begin only at this point and the resin thus passes to the solid state with an exothermic reaction. In general, the hardenable epoxy system passes from the storage tanks to the mold through pipes which are appropriately sized and positioned.

However, once inside the mold, the hardenable epoxy system must be able to flow easily and therefore it is necessary to provide methods of diffusion of the hardenable epoxy system which vary according to the type of infusion used.

Again by way of example, it should be noted that the method of lamination (or hand lay-up) is a manual method in which the laminated element is composed progressively by arranging in sequence all the laminas that characterize its final lay-up.

The hand lay-up process can be briefly and schematically described as follows:
- arrangement, inside the mold of the article, of layers of the reinforcement material (e.g., glass);
- impregnation of the reinforcement with the hardenable epoxy system in the liquid state;
- these operations are repeated a plurality of times until the desired thickness is obtained;
- finally, the system is consolidated by applying pressure (in closed molds) and optionally heat.

Indeed due to its manual nature, the process is rather cheap to implement, requiring infrastructure and equipment that can be easily accommodated. A further advantage resides in that it is possible to adapt the final composite article to the several requirements of the operator thanks to the manual control of each individual step of the construction of the laminated element. This in particular leads to the possibility to provide any type of lay-up, to introduce internal defects of several kinds, to modify the local properties of the fiber fabric used, to modify the properties of the resin used, and so forth, giving rise to a series of possible interventions during lamination which make the technique highly versatile and flexible to the needs of the operator.

The hand lay-up process is sometimes also known as manual lay-up or contact molding or also open molding. Each one of these alternative terms highlights particular aspects of the process: lay-up is performed manually by arranging each individual lamina, the laminas are arranged on a surface which constitutes a sort of male or female mold (depending on the concave or convex orientation, it is more appropriate to speak of one-side mold), which defines the shape of the laminated element, and the fabric is impregnated by depositing the liquid hardenable epoxy system while the mold is open. In the final step it is possible to use a mold which is complementary to the initial one so as to contact the entire laminated element during the hardening step and achieve a good surface finish on both faces of the laminated element.

The process in general is often associated with the use of fillers of every type, preferably reinforcing fillers, for example E-glass fibers. This occurs not due to technical requirements but because the quality and consistency of the articles and the general characteristics of the process in terms of times generally are suitable for applications for which carbon fibers are not economically justifiable.

It is possible to use both CSM and fabrics, woven or non-crimp. In general the fibers are supplied rolled up in large rolls (like fabric for clothes) and the operator, by means of cutters and scissors, cuts the several pieces which will constitute the laminas of the laminated element, according to the suitable geometry on the basis of the mold to be provided. A variation of hand lay-up is spray-up, in which a special gun is used which is provided with a pressurized injector of liquid hardenable epoxy system and with a chopper for skeins of continuous fibers (rovings). The chopper cuts the skeins at regular intervals, producing the short fibers which are fired in the direction of the mold together with the liquid hardenable epoxy system, depositing themselves randomly so as to cover the mold.

It is evident therefore that for applications in infusion, lamination, but also in filament winding and pouring and others, the hardenable epoxy resin system must be fluid enough to allow capillary penetration into the mold and optionally easy flow in the step of impregnation of the reinforcement material (if present).

To achieve this, the hardening agent sometimes must be associated with a specific epoxy resin which is more or less diluted so as to obtain such a viscosity of the resulting hardenable epoxy system as to ensure its fluidity. These are epoxy resins which comprise, in addition to the polyepoxide, the reactive diluents, i.e., monofunctional epoxides, see above.

The present invention relates to a preparation ("hardening mix") which comprises an anhydride (preferably an organic one) or a mixture of anhydrides (preferably organic ones), a catalyst, a co-catalyst and a cross-linking (or hardening) rate regulator. Preferably, the preparation consists of the above mentioned four components.

The anhydrides used in the formulation of the hardening mix are preferably organic anhydrides which can be saturated, unsaturated or aromatic, preferably aliphatic anhydrides; more preferably, they are cycloaliphatic anhydrides containing 4 to 24 atoms of carbon per anhydride molecule.

The anhydrides used (alone or in a mix with each other) preferably to formulate the hardening mix used in the hardenable epoxy system include anhydrides such as methyltetrahydrophthalic anhydride, hexahydrophthalic anhydride, methylhexahydrophthalic anhydride, tetrahydrophthalic anhydride, phthalic anhydride, maleic anhydride, trimellitic anhydride, methylendomethylene tetrahydrophthalic anhydride, dodecenyl succinic anhydride.

The catalyst used can be an amine, preferably an aliphatic or aromatic amine (or quaternary ammonium salts thereof), for example benzyl dimethyl amine (BDMA) or benzyl triethylammonium chloride (BTEAC), or an imidazole or mixtures thereof. The quantity used is comprised between 1.5% and 2.5% by weight, used relative to the anhydride (which constitutes 100% by weight), even better if comprised between 1.9% and 2.1% by weight.

The co-catalyst is a salt or organyl of electrophilic metals such as for example chromium (III), which is the preferred material, iron (III), aluminum (III), manganese (III), cobalt (III), cobalt (II), zinc (II) or mixtures thereof. The salts can be inorganic (for example halides) or organic (for example carboxylates). The term organyls is understood to reference covalent compounds between metal and organic residue. The quantity of co-catalyst used is comprised between 0.5% and 7.0%, better still if comprised between 2.5% and 4.0%, the above percentages being again by weight and to be added to a quantity of anhydride which constitutes the 100% by weight as reference.

Complexing agents of electrophilic metals, preferably organic acids, preferably at least dicarboxylic ones having 2 to 7 carbon atoms, such as for example selected from the group constituted by oxalic acid, maleic acid, malic acid, fumaric acid, salicylic acid, citric acid or mixtures thereof, have been used as hardening rate regulators.

The quantity of regulator used is comprised between 0.1% and 1.0%, better still if comprised between 0.4% and 0.7%, said percentages being always by weight and to be added to a quantity of anhydride which constitutes 100% by weight as reference.

The hardening mix for epoxy resins of the present invention is used in ratios from 0.9 to 1.1:1 among epoxy equivalents of the polyepoxide used in the hardenable epoxy system and anhydride equivalents of the hardening mix.

In preparing the hardenable epoxy system, the hardening mix can be added as such (i.e., pre-mixed) or in its individual components to the polyepoxide and to any other components of the resin. The triggering of hardening at the temperatures described herein then leads to the formation of hardened polyepoxide resins, which form bodies/articles of any desired type and geometry. By using fillers or inert reinforcements as additional components of the resin composite materials are obtained.

The invention is described further hereafter with a non-limiting intent in the following examples.

### EXAMPLES

### Example 1.

100 parts by weight of a mixture composed of methyltetrahydrophthalic anhydride, methylhexahydrophthalic anhydride and tetrahydrophthalic anhydride, 2 parts by weight of benzyl dimethyl amine (BDMA), 3.4 parts by weight of chromium (III) heptanoate and 0.5 parts by weight of oxalic acid were used to formulate the hardening mix. These components were thoroughly mixed until they were completely homogenized.

For the resin, 70 parts by weight of DGEBA epoxy resin were mixed with 30 parts by weight of reactive diluent (1,6 hexanediol diglycidyl ether) in order to obtain the desired viscosity.

The hardening agent and the resin thus obtained were mixed in a 1:1 ratio between epoxy equivalents (EE) and anhydride equivalents (AE).

The initial viscosity of the system is 250-350 mPa.s at 20 °C.

This formulation was placed in a thermostat-controlled bath at 20 °C, recording the increase in viscosity over time (pot life), the exothermic peak and the hardening time (gel time).

In these conditions, the following were recorded:

| | |
|---|---|
| Pot life | 90 minutes |
| Gel time | 150 minutes |
| Exothermic peak | 110°C. |

These parameters were found to be suitable for use of the material at ambient temperature.

### Application example 1.

Approximately 700 kg of the hardening agent according to the invention were prepared by using 100 parts by weight of a mixture of anhydrides composed of methyltetrahydrophthalic anhydride, methyl hexahydrophthalic anhydride and tetrahydrophthalic anhydride, 2 parts by weight of BDMA catalyst, 3.5 parts by weight of co-catalyst based on chromium (specifically chromium (III) heptanoate) and 0.7 parts by weight of oxalic acid.

At the same time, 700 kg of epoxy resin were prepared by using 70 parts by weight of a DGEBA liquid resin and 30 parts by weight of reactive diluent (1,6 hexanediol diglycidyl ether).

By using these materials in a 1:1 ratio by weight (which corresponds to a 1:1 ratio of the reactive equivalents), a 63-foot-long hull was produced by the infusion method.

The operating conditions of execution of the test were:
Ambient temperature 27 °C
Temperature of resin and hardening agent 28 °C
Mold temperature 28 °C

Approximately 1350 kg of the system of resin and hardening mix were used to provide the hull. As a whole, the infusion process lasted approximately 1 hour and 30 minutes. After infusion had ended, the temperature of the article was monitored to verify the actual occurrence of triggering and the consequent exothermic nature of the reaction and the progress of the cross-linking process. In the central region of the hull, the initial increase was approximately 1 °C every 5 minutes.

The hull was then covered with a black polyethylene sheet and left outside the yard to complete the polymerization process.

### Application example 2.

Approximately 1000 kg of the hardening agent according to the invention were prepared by using 100 parts by weight of a mixture of anhydrides composed of methyltetrahydrophthalic anhydride, methylhexahydrophthalic anhydride and methylendomethylene tetrahydrophthalic anhydride, 2 parts by weight of BDMA catalyst, 3.5 parts by weight of co-catalyst based on chromium (specifically chromium (III) heptanoate) and 0.5 parts by weight of maleic acid. At the same time, 1000 kg of epoxy resin were prepared by using 70 parts by weight of a DGEBA liquid resin and 30 parts by weight of reactive diluent (1.6 hexanediol diglycidyl ether).

By using these materials in a 1:1 ratio by weight (which corresponds to a 1:1 ratio of the reactive equivalents), a component of a turbine for wind-power generation was manufactured with the infusion method.

The operating conditions of execution of the test were:
Ambient temperature 25 °C
Temperature of resin and hardening agent 25 °C
Mold temperature 25 °C

Once infusion had ended, the hardening process underwent triggering at ambient temperature and was detected by means of the occurrence of exothermicity.

### Application example 3.

Approximately 10 kg of the hardening agent according to the invention were prepared by using 100 parts by weight of a mixture of anhydrides composed of methyltetrahydrophthalic anhydride, methylhexahydrophthalic anhydride and tetrahydrophthalic anhydride, 2 parts by weight of BTEAC catalyst, 3 parts by weight of co-catalyst based on iron (III) octoate, and 0.2 parts by weight of fumaric acid. At the same time, 10 kg of epoxy resin were prepared by using 80 parts by weight of a DGEBA liquid resin and 20 parts by weight of 1,6 hexanediol diglycidyl ether reactive diluent.

By using these materials in a 1:1 weight ratio (which corresponds to a 1:1 ratio of the reactive equivalents), a sheet of material reinforced with carbon fiber fabric was produced by manual lamination (hand lay-up).

Once the application had ended, the article was then made to harden at 40 °C.

The disclosure of Italian Patent Application no. MI2011A000797, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Use of a hardening mix for epoxy resins comprising (i) 100 parts by weight of an organic anhydride or mixture of organic anhydrides, (ii) 1.5-2.5 parts by weight relative to the anhydride of an amine catalyst selected from the group consisting of an aliphatic amine, an aromatic amine, a quaternary ammonium salt of an aliphatic amine, a quaternary ammonium salt of an aromatic amine or mixtures thereof, (iii) 0.5-7.0 parts by weight relative to the anhydride of a co-catalyst selected from the group consisting of a salt or an organyl of an electrophilic metal selected from the group consisting of Cr(III), Fe(III), Al(III), Mn(III), Co(III), Co(II) and Zn(II) or mixtures thereof, and (iv) 0.1-1.0 parts by weight relative to the anhydride of a regulator of the hardening rate consisting of an organic acid having 2-7 carbon atoms or a mixture of said organic acids, said organic acids being at least dicarboxylic, to harden epoxy resins at triggering temperatures comprised between -5°C and 50°C, under standard atmospheric pressure conditions (101.325 kPa).

2. The use according to claim 1, wherein the anhydride (i) is preferably cycloaliphatic, saturated or unsaturated, or aromatic and containing 4 to 24 carbon atoms, more preferably selected from the group consisting of methyltetrahydrophthalic anhydride, hexahydrophthalic anhydride, methylhexahydrophthalic anhydride, tetrahydrophthalic anhydride, phthalic anhydride, maleic anhydride, trimellitic anhydride, methylendomethylene tetrahydrophthalic anhydride, dodecenyl succinic anhydride or mixtures thereof.

3. The use according to one or more of the preceding claims, wherein the catalyst (ii) consists of benzyl dimethyl amine BDMA and/or benzyl triethylammonium chloride BTEAC and/or an imidazole.

4. The use according to one or more of the preceding claims, wherein the co-catalyst (iii) consists of Cr(III), preferably an organic salt of Cr(III), for example Cr(III) heptanoate.

5. The use according to one or more of the preceding claims, wherein the catalyst (ii) is present in 1.7-2.3 parts by weight relative to the anhydride and/or the co-catalyst (iii) is present in 2.5-4.0 parts by weight relative to the anhydride and/or the hardening rate regulator is present in 0.3-0.7 parts by weight relative to the anhydride.

6. The use according to one or more of the preceding claims, wherein a hardenable epoxy system comprising (a) a polyepoxide, (b) a hardening mix according to one or more of claims 1-5 or components (i)-(iv) thereof and (c) optionally a reactive diluent of the polyepoxide (a) is employed.

7. A method for obtaining a hardened epoxy resin, said method comprising a step of mixing (a) a polyepoxide with (b) a hardening mix for epoxy resins comprising (i) 100 parts by weight of an organic anhydride or mixture of organic anhydrides, (ii) 1.5-2.5 parts by weight relative to the anhydride of an amine catalyst selected from the group consisting of an aliphatic amine, an aromatic amine, a quaternary ammonium salt of an aliphatic amine, a quaternary ammonium salt of an aromatic amine or mixtures thereof, (iii) 0.5-7.0 parts by weight relative to the anhydride of a co-catalyst selected from the group consisting of a salt or an organyl of an electrophilic metal selected from the group consisting of Cr(III), Fe(III), Al(III), Mn(III), Co(III), Co(II) and Zn(II) or mixtures thereof, and (iv) 0.1-1.0 parts by weight relative to the anhydride of a regulator of the hardening rate consisting of an organic acid having 2-7 carbon atoms or a mixture of said organic acids, said organic acids being at least dicarboxylic, and a step of triggering the hardening at temperatures comprised between -5 °C and 50 °C, under standard atmospheric pressure conditions (101.325 kPa).

8. A method for obtaining a two- or three-dimensional body/article made of hardened epoxy resin or made of composite material comprising hardened epoxy resin, comprising a step of processing, preferably infusion, lamination, filament winding or pouring of a hardenable epoxy system comprising (a) a polyepoxide, (b) a hardening mix for epoxy resins comprising (i) 100 parts by weight of an organic anhydride or mixture of organic anhydrides, (ii) 1.5-2.5 parts by weight relative to the anhydride of an amine catalyst selected from the group consisting of an aliphatic amine, an aromatic amine, a quaternary ammonium salt of an aliphatic amine, a quaternary ammonium salt of an aromatic amine or mixtures thereof, (iii) 0.5-7.0 parts by weight relative to the anhydride of a co-catalyst selected from the group consisting of a salt or an organyl of an electrophilic metal selected from the group consisting of Cr(III), Fe(III), Al(III), Mn(III), Co(III), Co(II) and Zn(II) or mixtures thereof, and (iv) 0.1-1.0 parts by weight relative to the anhydride of a regulator of the hardening rate consisting of an organic acid having 2-7 carbon atoms or a mixture of said organic acids, said organic acids being at least dicarboxylic, or components (i)-(iv) thereof and (c) optionally a reactive diluent of the polyepoxide (a), and a step of triggering the hardening at temperatures comprised between -5°C and 50°C, under standard atmospheric pressure conditions (101.325 kPa).

9. The use according to claim 6 wherein the hardenable epoxy system is employed as an adhesive or sealant.

10. A hardening mix for epoxy resins comprising (i) 100 parts by weight of an organic anhydride or mixture of organic anhydrides, (ii) 1.5-2.5 parts by weight relative to the anhydride of an amine catalyst selected from the group consisting of an aliphatic amine, an aromatic amine, a quaternary ammonium salt of an aliphatic amine, a quaternary ammonium salt of an aromatic amine or mixtures thereof, (iii) 0.5-7.0 parts by weight relative to the anhydride of a co-catalyst selected from the group consisting of a salt or an organyl of an electrophilic metal selected from the group consisting of Cr(III), Fe(III), Mn(III), Co(III), Co(II) and Zn(II) or mixtures thereof, and (iv) 0.1-1.0 parts by weight relative to the anhydride of a regulator of the hardening rate consisting of an organic acid having 2-7 carbon atoms or a mixture of said organic acids, said organic acids being at least dicarboxylic.

11. The hardening mix according to claim 10, wherein the anhydride (i) is preferably cycloaliphatic, saturated or unsaturated, or aromatic and containing 4 to 24 carbon atoms, more preferably selected from the group consisting of methyltetrahydrophthalic anhydride, hexahydrophthalic anhydride, methylhexahydrophthalic anhydride, tetrahydrophthalic anhydride, phthalic anhydride, maleic anhydride, trimellitic anhydride, methylendomethylene tetrahydrophthalic anhydride, dodecenyl succinic anhydride or mixtures thereof.

12. The hardening mix according to one or more of claims 10 or 11, wherein the catalyst (ii) consists of BDMA and/or BTEAC and/or an imidazole.

13. The hardening mix according to one or more of claims 10-12, wherein the co-catalyst (iii) consists of Cr(III), preferably an organic salt of Cr(III), for example Cr(III) heptanoate.

14. The hardening mix according to one or more of claims 10-13, wherein the catalyst (ii) is present in 1.7-2.3 parts by weight relative to the anhydride and/or the co-catalyst (iii) is present in 2.5-4.0 parts by weight relative to the anhydride and/or the hardening rate regulator is present in 0.3-0.7 parts by weight relative to the anhydride.

15. Use of an organic anhydride to prepare a hardening mix according to one or more of claims 10-14.

16. A hardenable epoxy system comprising (a) a polyepoxide, (b) a hardening mix according to one or more of claims 10-14 or components (i)-(iv) thereof and (c) optionally a reactive diluent of the polyepoxide (a).

17. A hardened epoxy resin comprising the product of reaction between (a) a polyepoxide, (b) a hardening mix according to one or more of claims 10-14, and optionally (c) a reactive diluent of the polyepoxide (a).

18. A composite material comprising hardened epoxy resin according to claim 17.

19. A two- or three-dimensional body/article made of hardened epoxy resin according to claim 17 or made of composite material according to claim 18.

20. Use of the body/article according to claim 19 as coating or as part in the field of building or in the construction of plants or as coating or load-bearing part or movable part in the construction of vehicles, boats, ships, aircraft, vehicles on rails, components for wind-power generators.

## Patentansprüche

1. Verwendung einer Härtungsmischung für Epoxyharze umfassend (i) 100 Gewichtsteile eines organischen Anhydrids oder einer Mischung aus organischen Anhydriden, (ii) 1,5-2,5 Gewichtsteile relativ zu dem Anhydrid eines Aminkatalysators gewählt aus der Gruppe bestehend aus einem aliphatischen Amin, einem aromatischem Amin, einem quaternären Ammoniumsalz eines aliphatischen Amins, einem quaternären Ammoniumsalz eines aromatischen Amins oder Mischungen daraus, (iii) 0,5-7,0 Gewichtsteile relativ zu dem Anhydrid eines Co-Katalysators gewählt aus der Gruppe bestehend aus einem Salz oder einem Organyl eines elektrophilen Metalls gewählt aus der Gruppe bestehend aus Cr(III), Fe(III), Al(III), Mn(III), Co(III), Co(II), und Zn(II) oder Mischungen daraus, und (iv) 0,1-1,0 Gewichtsteile relativ zu dem Anhydrid eines Härtungsrate-Regulators bestehend aus einer organischen Säure mit 2-7 Kohlenstoffatomen oder einer Mischung aus den genannten organischen Säuren, wobei die organischen Säuren mindestens Dicarbonsäuren sind, um Epoxyharze bei auslösenden Temperaturen eingeschlossen zwischen -5°C und 50°C unter atmosphärischen Standarddruckbedingungen (101,325 kPa) zu härten.

2. Die Verwendung gemäß Anspruch 1, worin das Anhydrid (i) vorzugsweise zykloaliphatisch, gesättigt oder ungesättigt, oder aromatisch und enthaltend 4 bis 24 Kohlenstoffatome ist, bevorzugter gewählt aus der Gruppe bestehend aus Methyltetrahydrophthalsäureanhydrid, Hexahydrophthalsäureanhydrid, Methylhexahydrophthalsäureanhydrid, Tetrahydrophthalsäureanhydrid, Phthalsäureanhydrid, Maleinsäureanhydrid, Trimellitsäureanhydrid, Methylendomethylentetrahydrophthalsäureanhydrid, Dodecenylbernsteinsäureanhydrid oder Mischungen daraus.

3. Die Verwendung gemäß einem oder mehreren der vorhergehenden Ansprüche, worin der Katalysator (ii) aus Benzyldimethylamin BDMA und/oder Benzyltriethylammoniumchlorid BTEAC und/oder einem Imidazol besteht.

4. Die Verwendung gemäß einem oder mehreren der vorhergehenden Ansprüche, worin der Co-Katalysator (iii) aus Cr(III), vorzugsweise einem organischen Salz von Cr(III), zum Beispiel Cr(III) Heptanoat, besteht.

5. Die Verwendung gemäß einem oder mehreren der vorhergehenden Ansprüche, worin der Katalysator (ii) in 1,7-2,3 Gewichtsteilen relativ zu dem Anhydrid vorhanden ist, und/oder der Co-Katalysator (iii) in 2,5-4,0 Gewichtsteilen relativ zu dem Anhydrid vorhanden ist, und/oder der Härtungsrate-Regulator in 0,3-0,7 Gewichtsteilen relativ zu dem Anhydrid vorhanden ist.

6. Die Verwendung gemäß einem oder mehreren der vorhergehenden Ansprüche, worin ein härtbares Epoxysystem umfassend (a) ein Polyepoxid, (b) eine Härtungsmischung gemäß einem oder mehreren der Ansprüche 1-5 oder Komponenten (i) - (iv) davon und (c) wahlweise ein reaktives Verdünnungsmittel des Polyepoxids (a) verwendet wird.

7. Ein Verfahren zum Erhalten eines gehärteten Epoxyharzes, wobei das Verfahren einen Schritt Mischen (a) eines Polyepoxids mit (b) einer Härtungsmischung für Epoxyharze umfassend (i) 100 Gewichtsteile eines organischen Anhydrids oder einer Mischung aus organischen Anhydriden, (ii) 1,5-2,5 Gewichtsteile relativ zu dem Anhydrid eines Aminkatalysators gewählt aus der Gruppe bestehend aus einem aliphatischen Amin, einem aromatischen Amin, einem quaternären Ammoniumsalz eines aliphatischen Amins, einem quaternären Ammoniumsalz eines aromatischen Amins oder Mischungen daraus, (iii) 0,5-7,0 Gewichtsteile relativ zu dem Anhydrid eines Co-Katalysators gewählt aus der Gruppe bestehend aus einem Salz oder einem Organyl eines elektrophilen Metalls gewählt aus der Gruppe bestehend aus Cr(III), Fe(III), Al(III), Mn(III), Co(III), Co(II), und Zn(II) oder Mischungen daraus, und (iv) 0,1-1,0 Gewichtsteile relativ zu dem Anhydrid eines Härtungsrate-Regulators bestehend aus einer organischen Säure mit 2-7 Kohlenstoffatomen oder einer Mischung aus den genannten organischen Säuren, wobei die genannten organischen Säuren mindestens Dicarbonsäuren sind, und einen Schritt Auslösen der Härtung bei Temperaturen eingeschlossen zwischen -5°C und 50°C unter atmosphärischen Standarddruckbedingungen (101.325 kPa) umfasst.

8. Ein Verfahren zum Erhalten eines zwei- oder dreidimensionalen Körpers/Artikels hergestellt aus gehärtetem Epoxyharz oder hergestellt aus Verbundmaterial umfassend gehärtetes Epoxyharz, umfassend einen Schritt der Verarbeitung, vorzugsweise Aufguß, Laminierung, Heizwicklung oder Abguß eines härtbaren Epoxysystems umfassend (a) ein Polyepoxid, (b) eine Härtungsmischung für Epoxyharze umfassend (i) 100 Gewichtsteile eines organischen Anhydrids oder einer Mischung aus organischen Anhydriden, (ii) 1,5-2,5 Gewichtsteile relativ zu dem Anhydrid eines Aminkatalysators gewählt aus der Gruppe bestehend aus einem aliphatischen Amin, einem aromatischen Amin, einem quaternären Ammoniumsalz eines aliphatischen Amins, einem quaternären Ammoniumsalz eines aromatischen Amins oder Mischungen daraus, (iii) 0,5-7,0 Gewichtsteile relativ zu dem Anhydrid eines Co-Katalysators gewählt aus der Gruppe bestehend aus einem Salz oder einem Organyl eines elektrophilen Metalls gewählt aus der Gruppe bestehend aus Cr(III), Fe(III), Al(III), Mn(III), Co(III), Co(II), und Zn(II) oder Mischungen daraus, und (iv) 0,1-1,0 Gewichtsteile relativ zu dem Anhydrid eines Härtungsrate-Regulators bestehend aus einer organischen Säure mit 2-7 Kohlenstoffatomen oder einer Mischung aus den genannten organischen Säuren, wobei die genannten organischen Säuren mindestens Dicarbonsäuren sind oder Komponenten (i) - (iv) davon, und (c) wahlweise ein reaktives Verdünnungsmittel des Polyepoxids (a), und einen Schritt Auslösen der Härtung bei Temperaturen eingeschlossen zwischen -5°C und 50°C, unter atmosphärischen Standarddruckbedingungen (101.325 kPa).

9. Die Verwendung gemäß Anspruch 6, worin das härtbare Epoxysystem als ein Klebstoff oder Dichtungsstoff verwendet wird.

10. Eine Härtungsmischung für Epoxyharze umfassend (i) 100 Gewichtsteile eines organischen Anhydrids oder einer Mischung aus organischen Anhydriden, (ii) 1,5-2,5 Gewichtsteile relativ zu dem Anhydrid eines Aminkatalysators gewählt aus der Gruppe bestehend aus einem aliphatischen Amin, einem aromatischen Amin, einem quaternären Ammoniumsalz eines aliphatischen Amins, einem quaternären Ammoniumsalz eines aromatischen Amins oder Mischungen daraus, (iii) 0,5-7,0 Gewichtsteile relativ zu dem Anhydrid eines Co-Katalysators gewählt aus der Gruppe bestehend aus einem Salz oder einem Organyl eines elektrophilen Metalls gewählt aus der Gruppe bestehend aus Cr(III), Fe(III), Mn(III), Co(III), Co(II), und Zn(II) oder Mischungen daraus, und (iv) 0,1-1,0 Gewichtsteile relativ zu dem Anhydrid eines Härtungsrate-Regulators bestehend aus einer organischen Säure mit 2-7 Kohlenstoffatomen oder einer Mischung aus den genannten organischen Säuren, wobei die genannten organischen Säuren mindestens die Carbonsäuren sind.

11. Die Härtungsmischung gemäß Anspruch 10, worin das Anhydrid (i) vorzugsweise zykloaliphatisch, gesättigt oder ungesättigt, oder aromatisch und enthaltend 4 bis 24 Kohlenstoffatome ist, bevorzugter gewählt aus der Gruppe bestehend aus Methyltetrahydrophthalsäureanhydrid, Hexahydrophthalsäureanhydrid, Methylhexahydrophthalsäureanhydrid, Tetrahydrophthalsäureanhydrid, Phthalsäureanhydrid, Maleinsäureanhydrid, Trimellitsäureanhydrid, Methylendomethylentetrahydrophthalsäureanhydrid, Dodecenylbernsteinsäureanhydrid oder Mischungen daraus.

12. Die Härtungsmischung gemäß einem oder mehreren der Ansprüche 10 oder 11, worin der Katalysator (ii) aus BDMA und/oder BTEAC und/oder einem Imidazol besteht.

13. Die Härtungsmischung gemäß einem oder mehreren der Ansprüche 10-12, worin der Co-Katalysator (iii) aus Cr(III), vorzugsweise einem organischen Salz von Cr(III), zum Beispiel Cr(III) Heptanoat, besteht.

14. Die Härtungsmischung gemäß einem oder mehreren der Ansprüche 10-13, worin der Katalysator (ii) in 1,7-2,3 Gewichtsteilen relativ zu dem Anhydrid vorhanden ist, und/oder der Co-Katalysator (iii) in 2,5-4,0 Gewichtsteilen relativ zu dem Anhydrid vorhanden ist, und/oder der Härtungsrate-Regulator in 0,3-0,7 Gewichtsteilen relativ zu dem Anhydrid vorhanden ist.

15. Verwendung eines organischen Anhydrids, um eine Härtungsmischung gemäß einem oder mehreren der Ansprüche 10-14 herzustellen.

16. Ein härtbares Epoxysystem umfassend (a) ein Polyepoxid, (b) eine Härtungsmischung gemäß einem oder mehreren der Ansprüche 10-14 oder Komponenten (i)-(iv) davon, und (c) wahlweise ein reaktives Verdünnungsmittel des Polyepoxids (a).

17. Ein gehärtetes Epoxyharz umfassend das Produkt der Reaktion zwischen (a) einem Polyepoxid, (b) einer Härtungsmischung gemäß einem oder mehreren der Ansprüche 10-14, und wahlweise (c) ein reaktives Verdünnungsmittel des Polyepoxids (a).

18. Ein Verbundmaterial umfassend gehärtetes Epoxyharz gemäß Anspruch 17.

19. Ein zwei- oder dreidimensionaler Körper/Artikel hergestellt aus gehärtetem Epoxyharz gemäß Anspruch 17 oder hergestellt aus Verbundmaterial gemäß Anspruch 18.

20. Verwendung des Körpers/Artikels gemäß Anspruch 19 als Beschichtung oder als Teil in dem Gebiet von Bauwerken oder in der Konstruktion von Fabriken oder als Beschichtung oder lasttragender Teil oder beweglicher Teil in der Konstruktion von Fahrzeugen, Booten, Schiffen, Flugzeugen, Schienenfahrzeugen, Komponenten für Windstromerzeuger.

## Revendications

1. Utilisation d'un mélange durcisseur pour résines époxy comprenant (i) 100 parties en poids d'un anhydride organique ou d'un mélange d'anhydrides organiques, (ii) 1,5 à 2,5 parties en poids, par rapport à l'anhydride, d'un catalyseur de type amine choisi dans l'ensemble constitué par une amine aliphatique, une amine aromatique, un sel d'ammonium quaternaire d'une amine aliphatique, un sel d'ammonium quaternaire d'une amine aromatique, et leurs mélanges, (iii) 0,5 à 7,0 parties en poids, par rapport à l'anhydride, d'un co-catalyseur choisi dans l'ensemble constitué par un sel ou un organyle d'un métal électrophile choisi dans l'ensemble constitué par Cr(III), Fe(III), Al(III), Mn(III), Co(III), Co(II) et Zn(II), et leurs mélanges, et (iv) 0,1 à 1,0 partie en poids, par rapport à l'anhydride, d'un régulateur de la vitesse de durcissement consistant en un acide organique ayant 2 à 7 atomes de carbone ou un mélange de tels acides organiques, lesdits acides organiques étant au moins dicarboxyliques, pour durcir des résines époxy à des températures de déclenchement comprises entre -5°C et 50°C, dans des conditions standard de pression atmosphérique (101,325 kPa).

2. Utilisation selon la revendication 1, dans laquelle l'anhydride (i) est de préférence cycloaliphatique, saturé ou insaturé, ou aromatique, et contient 4 à 24 atomes de carbone, mieux encore est choisi dans l'ensemble constitué par l'anhydride méthyltétrahydrophtalique, l'anhydride hexahydrophtalique, l'anhydride méthylhexahydrophtalique, l'anhydride tétrahydrophtalique, l'anhydride phtalique, l'anhydride maléique, l'anhydride trimellitique, l'anhydride méthylendométhylènetétrahydrophtalique, l'anhydride dodécénylsuccinique, et leurs mélanges.

3. Utilisation selon une ou plusieurs des revendications précédentes, dans laquelle le catalyseur (ii) consiste en du benzyldiméthylamine BDMA et/ou du chlorure de benzyltriéthylammonium BTEAC et/ou un imidazole.

4. Utilisation selon une ou plusieurs des revendications précédentes, dans laquelle le co-catalyseur (iii) consiste en Cr(III), de préférence en un sel organique de Cr(III), par exemple en de l'heptanoate de Cr(III).

5. Utilisation selon une ou plusieurs des revendications précédentes, dans laquelle le catalyseur (ii) est présent à raison de 1,7 à 2,3 parties en poids par rapport à l'anhydride, et/ou le co-catalyseur (iii) est présent à raison de 2,5 à 4,0 parties en poids par rapport à l'anhydride, et/ou le régulateur de vitesse de durcissement est présent à raison de 0,3 à 0,7 partie en poids par rapport à l'anhydride.

6. Utilisation selon une ou plusieurs des revendications précédentes, dans laquelle un système époxy durcissable comprenant (a) un polyépoxyde, (b) un mélange durcisseur selon une ou plusieurs des revendications 1 à 5 ou les composants (i) à (iv) de celui-ci et (c) éventuellement un diluant réactif du polyépoxyde (a) est employé.

7. Procédé d'obtention d'une résine époxy durcie, ledit procédé comprenant une étape de mélange (a) d'un polyépoxyde avec (b) un mélange durcisseur pour résines époxy comprenant (i) 100 parties en poids d'un anhydride organique ou d'un mélange d'anhydrides organiques, (ii) 1,5 à 2,5 parties en poids, par rapport à l'anhydride, d'un catalyseur de type amine choisi dans l'ensemble constitué par une amine aliphatique, une amine aromatique, un sel d'ammonium quaternaire d'une amine aliphatique, un sel d'ammonium quaternaire d'une amine aromatique, et leurs mélanges, (iii) 0,5 à 7,0 parties en poids, par rapport à l'anhydride, d'un co-catalyseur choisi dans l'ensemble constitué par un sel ou un organyle d'un métal électrophile choisi dans l'ensemble constitué par Cr(III), Fe(III), Al(III), Mn(III), Co(III), Co(II) et Zn(II), et leurs mélanges, et (iv) 0,1 à 1,0 partie en poids, par rapport à l'anhydride, d'un régulateur de la vitesse de durcissement consistant en un acide organique ayant 2 à 7 atomes de carbone ou un mélange de tels acides organiques, lesdits acides organiques étant au moins dicarboxyliques, et une étape de déclenchement du durcissement à des températures comprises entre -5°C et 50°C, dans des conditions standard de pression atmosphérique (101,325 kPa).

8. Procédé pour obtenir un corps/article bi- ou tri-dimensionnel fait d'une résine époxy durcie ou fait d'un matériau composite comprenant une résine époxy durcie, comprenant une étape de traitement, de préférence par infusion, stratification, enroulement filamentaire ou versage, d'un système époxy durcissable comprenant (a)un polyépoxyde, (b) un mélange durcisseur pour résines époxy comprenant (i) 100 parties en poids d'un anhydride organique ou d'un mélange d'anhydrides organiques, (ii) 1,5 à 2,5 parties en poids, par rapport à l'anhydride, d'un catalyseur de type amine choisi dans l'ensemble constitué par une amine aliphatique, une amine aromatique, un sel d'ammonium quaternaire d'une amine aliphatique, un sel d'ammonium quaternaire d'une amine aromatique, et leurs mélanges, (iii) 0,5 à 7,0 parties en poids, par rapport à l'anhydride, d'un co-catalyseur choisi dans l'ensemble constitué par un sel ou un organyle d'un métal électrophile choisi dans l'ensemble constitué par Cr(III), Fe(III), Al(III), Mn(III), Co(III), Co(II) et Zn(II), et leurs mélanges, et (iv) 0,1 à 1,0 partie en poids, par rapport à l'anhydride, d'un régulateur de la vitesse de durcissement consistant en un acide organique ayant 2 à 7 atomes de carbone ou un mélange de tels acides organiques, lesdits acides organiques étant au moins dicarboxyliques, ou les composants (i) à (iv) de celui-ci, et (c) éventuellement un diluant réactif du polyépoxyde (a), et une étape de déclenchement du durcissement à des températures comprises entre -5°C et 50°C, dans des conditions standard de pression atmosphérique (101,325 kPa).

9. Utilisation selon la revendication 6, dans laquelle le système époxy durcissable est employé en tant qu'adhésif ou agent d'étanchéité.

10. Mélange durcisseur pour résines époxy comprenant (i) 100 parties en poids d'un anhydride organique ou d'un mélange d'anhydrides organiques, (ii) 1,5 à 2,5 parties en poids, par rapport à l'anhydride, d'un catalyseur de type amine choisi dans l'ensemble constitué par une amine aliphatique, une amine aromatique, un sel d'ammonium quaternaire d'une amine aliphatique, un sel d'ammonium quaternaire d'une amine aromatique, et leurs mélanges, (iii) 0,5 à 7,0 parties en poids, par rapport à l'anhydride, d'un co-catalyseur choisi dans l'ensemble constitué par un sel ou un organyle d'un métal électrophile choisi dans l'ensemble constitué par Cr(III), Fe(III), Al(III), Mn(III), Co(III), Co(II) et Zn(II), et leurs mélanges, et (iv) 0,1 à 1,0 partie en poids, par rapport à l'anhydride, d'un régulateur de la vitesse de durcissement consistant en un acide organique ayant 2 à 7 atomes de carbone ou un mélange de tels acides organiques, lesdits acides organiques étant au moins dicarboxyliques.

11. Mélange durcisseur selon la revendication 10, dans lequel l'anhydride (i) est de préférence cycloaliphatique, saturé ou insaturé, ou aromatique, et contient 4 à 24 atomes de carbone, mieux encore est choisi dans l'ensemble constitué par l'anhydride méthyltétrahydrophtalique, l'anhydride hexahydrophtalique, l'anhydride méthylhexahydrophtalique, l'anhydride tétrahydrophtalique, l'anhydride phtalique, l'anhydride maléique, l'anhydride trimellitique, l'anhydride méthylendométhylènetétrahydrophtalique, l'anhydride dodécénylsuccinique, et leurs mélanges.

12. Mélange durcisseur selon une ou plusieurs des revendications 10 et 11, dans lequel le catalyseur (ii) consiste en du BDMA et/ou du BTEAC et/ou un imidazole.

13. Mélange durcisseur selon une ou plusieurs des revendications 10 à 12, dans lequel le co-catalyseur (iii) consiste en Cr(III), de préférence en un sel organique de Cr(III), par exemple en de l'heptanoate de Cr(III).

14. Mélange durcisseur selon une ou plusieurs des revendications 10 à 13, dans lequel le catalyseur (ii) est présent à raison de 1,7 à 2,3 parties en poids par rapport à l'anhydride, et/ou le co-catalyseur (iii) est présent à raison de 2,5 à 4,0 parties en poids par rapport à l'anhydride, et/ou le régulateur de vitesse de durcissement est présent à raison de 0,3 à 0,7 partie en poids par rapport à l'anhydride.

15. Utilisation d'un anhydride organique pour préparer un mélange durcisseur selon une ou plusieurs des revendications 10 à 14.

16. Système époxy durcissable comprenant (a) un polyépoxyde, (b) un mélange durcisseur selon une ou plusieurs des revendications 10 à 14 ou les composants (i) à (iv) de celui-ci, et (c) éventuellement un diluant réactif du polyépoxyde (a).

17. Résine époxy durcie comprenant le produit de la réaction entre (a) un polyépoxyde, (b) un mélange durcisseur selon une ou plusieurs des revendications 10 à 14, et éventuellement (c) un diluant réactif du polyépoxyde (a).

18. Matériau composite comprenant une résine époxy durcie selon la revendication 17.

19. Corps/article bi- ou tri-dimensionnel fait d'une résine époxy durcie selon la revendication 17 ou fait d'un matériau composite selon la revendication 18.

20. Utilisation du corps/article selon la revendication 19 en tant que revêtement ou en tant que pièce dans le domaine du bâtiment ou dans la construction d'usines ou en tant que revêtement ou pièce porteuse ou pièce mobile dans la construction de véhicules, bateaux, navires, aéronefs, véhicules sur rails, composants pour génératrices éoliennes.
